(19)

**Europäisches Patentamt**
**European Patent Office**
**Office européen des brevets**

(11)  **EP 3 316 064 B1**

(12)  # EUROPÄISCHE PATENTSCHRIFT

(45) Veröffentlichungstag und Bekanntmachung des Hinweises auf die Patenterteilung:
**25.09.2019  Patentblatt 2019/39**

(21) Anmeldenummer: **17196208.7**

(22) Anmeldetag: **12.10.2017**

(51) Int Cl.:
*G05D 1/02* *(2006.01)*      *B60W 30/16* *(2012.01)*

(54)  **VORRICHTUNG ZUR LÄNGSREGELUNG EINES NUTZFAHRZEUGS IN EINEM FAHRZEUGVERBAND**

APPARATUS FOR LONGITUDINAL CONTROL OF A TRUCK IN A VEHICLE PLATOON

DISPOSITIF D'ASSERVISSEMENT LONGITUDINAL D'UN VÉHICULE UTILITAIRE DANS UN CONVOI DE VÉHICULES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.10.2016   DE 102016012868**

(43) Veröffentlichungstag der Anmeldung:
**02.05.2018   Patentblatt 2018/18**

(73) Patentinhaber: **MAN Truck & Bus SE
80995 München (DE)**

(72) Erfinder:
 • **Huber, Martin
  81243 München (DE)**
 • **Jerg, Stefan
  85737 Ismaning (DE)**
 • **Drimml, Peter
  85221 Dachau (DE)**

(74) Vertreter: **v. Bezold & Partner Patentanwälte - PartG mbB
Akademiestraße 7
80799 München (DE)**

(56) Entgegenhaltungen:
**WO-A1-2015/047178**

 • **B. BESSELINK ET AL: "Control of platoons of heavy-duty vehicles using a delay-based spacing policy", IFAC-PAPERSONLINE, Bd. 48, Nr. 12, 28. Juni 2015 (2015-06-28) , Seiten 364-369, XP055429647, ISSN: 2405-8963, DOI: 10.1016/j.ifacol.2015.09.405**
 • **ERIK HELLSTRÖM ET AL: "Look-ahead control for heavy trucks to minimize trip time and fuel consumption", CONTROL ENGINEERING PRACTICE, PERGAMON PRESS, OXFORD, GB , Bd. 17, Nr. 2 2. Februar 2009 (2009-02-02), Seiten 245-254, XP002726504, ISSN: 0967-0661, DOI: 10.1016/J.CONENGPRAC.2008.07.005 Gefunden im Internet: URL:http://www.sciencedirect.com/science/article/pii/S0967066108001251 [gefunden am 2008-08-15]**

EP 3 316 064 B1

**Beschreibung**

Die Erfindung betrifft eine Technik zur Längsregelung eines Nutzfahrzeugs in einem Fahrzeugverband. Insbesondere betrifft die Erfindung eine Vorrichtung zur Längsregelung und ein damit ausgestattetes Nutzfahrzeug.

Das Fahren mehrerer Fahrzeuge in einem Fahrzeugverband ist heute nicht mehr die Ausnahme, sondern die Regel. Das Fahren im Fahrzeugverband ermöglicht beispielsweise eine Abstandsregelung zum vorausfahrenden Fahrzeug zur Entlastung des Fahrers bei stockendem Verkehr und Autobahnfahrten oder ein teilautonomes Fahren, bei dem das vorausfahrende Fahrzeug die Fahrstrecke vorgibt.

Ferner werden Kraftstoffverbrauch und $CO_2$-Emissionen bei Fahrzeugen, die beispielsweise im Fernverkehr im Einsatz sind, zu einem überwiegenden Anteil durch den Luftwiderstand verursacht. Hinreichend dicht hintereinanderfahrende Fahrzeuge können ihren Verbrauch und ihre Emissionen erheblich reduzieren, da der Luftwiderstand nur am ersten Fahrzeug des Fahrzeugverbands (der auch als "Platoon" bezeichnet wird) in vollem Umfang zum Tragen kommt. Trotz der dicht aufeinanderfolgenden Fahrzeuge im Fahrzeugverband kann eine hohe Sicherheit gegen Auffahrunfälle erreicht werden, indem die Fahrzeuge miteinander kommunizieren (d.h. "vernetzt") sind, beispielsweise zum automatisierten und zeitgleichen Abbremsen der Fahrzeuge.

Aufgrund der Masse eines Nutzfahrzeugs kann dessen Kraftstoffverbrauch durch eine an die Fahrstrecke angepasste Fahrweise erheblich verringert werden. Jedoch steht die herkömmliche Abstandsregelung im Fahrzeugverband einer solchen kraftstoffsparenden, fahrzeugindividuellen Fahrweise entgegen.

Das Dokument WO 2015/047178 A1 beschreibt ein Regelungssystem für einen Fahrzeugverband mit einem Führungsfahrzeug. Jedes Fahrzeug im Fahrzeugverband umfasst eine Positionseinrichtung und eine Kommunikationseinrichtung zur drahtlosen Kommunikation. Das Führungsfahrzeug bestimmt ein ortsbezogenes Fahrprofil. Daraus wird eine Fahrstrategie für alle Fahrzeuge im Fahrzeugverband bestimmt. Insbesondere übernimmt die Fahrstrategie ortsbezogene Sollgrößen des Fahrprofils, welche die Geschwindigkeit umfassen.

Die Wissenschaftspublikation "Control of platoons of heavy-duty vehicles using a delay-based spacing policy", IFAC-PapersOnLine, Band 48, Ausgabe 12, 2015, Seiten 364 bis 369 von B. Besselink und K.H. Johansson beschreibt mit mathematischen Methoden eine Fahrzeugkinematik, die der Bewegung desselben Fahrzeugs auf derselben Strecke zu verschiedenen Zeiten entspricht. Dabei ist die Bewegung ausschließlich eine Funktion des Orts.

Somit besteht eine Aufgabe der vorliegenden Erfindung darin, eine Technik zur Längsregelung eines Nutzfahrzeugs anzugeben, welche eine kraftstoffsparende Fahrweise des Nutzfahrzeugs in einem Fahrzeugverband ermöglicht. Eine weitere oder alternative Aufgabe besteht darin, allen Fahrzeugen im Fahrzeugverband eine Kraftstoffeinsparung zu ermöglichen, welche die aerodynamischen Vorteile des Fahrzeugverbands mit einer an die Fahrstrecke angepassten Fahrweise verbindet.

Diese Aufgabe oder Aufgaben werden durch eine Vorrichtung bzw. ein Nutzfahrzeug mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem Aspekt der Erfindung ist eine Vorrichtung zur Längsregelung eines Nutzfahrzeugs in einem Fahrzeugverband hintereinanderfahrender Fahrzeuge bereitgestellt. Die Vorrichtung umfasst eine Kommunikationseinheit des Nutzfahrzeugs, die dazu ausgebildet ist, einen für die Fahrzeuge im Fahrzeugverband einheitlichen, ortsbezogenen Geschwindigkeitsverlauf bereitzustellen für eine vorausliegende Fahrstrecke des Fahrzeugverbands; und eine Längsregelung des Nutzfahrzeugs, die dazu ausgebildet ist, einen variablen Abstand zum vorausfahrenden Fahrzeug derart zu regeln, dass das Nutzfahrzeug eine vom ortsbezogenen Geschwindigkeitsverlauf vorgegebene Geschwindigkeit mit einer konstanten Zeitdifferenz zum vorausfahrenden Fahrzeug einhält.

Zumindest in Ausführungsbeispielen kann das Nutzfahrzeug, indem es gemäß dem einheitlichen, ortsbezogenen Geschwindigkeitsverlauf fährt und zugleich die konstante Zeitdifferenz zum vorausfahrenden Fahrzeug einhält, innerhalb des Fahrzeugverbands mit einer Geschwindigkeit fahren, die ortsabhängig, d. h. an die Fahrstrecke angepasst, ist. Dadurch kann eine Fahrweise erreicht werden, die einen ortsabhängig vorteilhaften Kraftstoffeinsatz ermöglicht selbst dann, wenn dazu eine Änderung der Geschwindigkeit auf Abschnitten der Fahrstrecke erforderlich ist. Die Abschnitte können beispielsweise kürzer sein als eine Länge des Fahrzeugverbands oder als eine Länge des Abstands zwischen hintereinanderfahrenden Fahrzeugen des Fahrzeugverbands.

In nämlichen oder weiteren Ausführungsbeispielen können alle Fahrzeuge des Fahrzeugverbands von der ortsangepassten Geschwindigkeit profitieren, da die Längsregelung jedes Fahrzeugs auf dem kommunizierten einheitlichen Geschwindigkeitsverlauf basiert.

Der ortsbezogene Geschwindigkeitsverlauf kann von einer Topografie der Fahrstrecke, Radien der Fahrstrecke und/oder Höchstgeschwindigkeiten entlang der Fahrstrecke abhängen. Der einheitliche, ortsbezogene Geschwindigkeitsverlauf kann kommuniziert und der Längsregelung zugrunde gelegt werden bevor das erste Fahrzeug im Fahrzeugverband die betreffende Fahrstrecke erreicht. Die Längsregelung kann den Geschwindigkeitsverlauf des dem Nutzfahrzeug vorausfahrenden Fahrzeugs zumindest für die Dauer der konstanten Zeitdifferenz antizipieren, d. h. der Längsregelung den zukünftigen Verlauf der Geschwindigkeit des vorausfahrenden Fahrzeugs zugrunde legen.

Die Zeitdifferenz kann auch als Zeitabstand, Zeitlücke oder Zeitkonstante bezeichnet werden. Jedes Fahrzeug des Fahrzeugverbands kann eine eigene Zeitdifferenz (optional bestimmen und) seiner Längsregelung zugrunde legen. Die Zeitdifferenz kann für die vorausliegende Fahrstrecke (oder jeweils für Abschnitte der Fahrstrecke) zeitlich konstant sein. Die konstante Zeitdifferenz kann auch als feste Zeitdifferenz bezeichnet werden.

Die Längsregelung kann gemäß mindestens einer Führungsgröße erfolgen. Eine Führungsgröße kann auch als eine Soll-Größe bezeichnet werden. Die Führungsgröße kann der Längsregelung als (beispielsweise ortsabhängiger und/oder zeitabhängiger) Verlauf zugrunde gelegt sein. Die Führungsgröße kann im Fahrverhalten des Nutzfahrzeugs als ein Mittelwert der entsprechenden Größe erkennbar sein.

Die Längsregelung kann den Abstand zum vorausfahrenden Fahrzeug gemäß der festen Zeitdifferenz zum vorausfahrenden Fahrzeug regeln. Beispielsweise kann der Längsregelung eine Führungsgröße des Abstands zugrunde gelegt sein. Die Längsregelung des Abstands gemäß der konstanten Zeitdifferenz kann die Einheitlichkeit des ortsbezogenen Geschwindigkeitsverlaufs für das Nutzfahrzeug und das vorausfahrende Fahrzeug implizieren. Beispielsweise kann durch Ausführen einer entsprechenden Längsregelung in jedem nachfahrenden Fahrzeug des Fahrzeugverbands die Einheitlichkeit des ortsbezogenen Geschwindigkeitsverlaufs im Fahrzeugverband erreicht werden.

Alternativ oder ergänzend kann die Längsregelung die Geschwindigkeit des Nutzfahrzeugs gemäß dem einheitlichen, ortsbezogenen Geschwindigkeitsverlauf regeln. Beispielsweise kann der Längsregelung eine Führungsgröße der Geschwindigkeit zugrunde gelegt sein. Die Längsregelung des Abstands gemäß des einheitlichen, ortsbezogenen Geschwindigkeitsverlaufs kann die feste Zeitdifferenz implizieren.

Optional regelt die Längsregelung sowohl den Abstand als auch die Geschwindigkeit. Die Längsregelung kann den Abstand zum vorausfahrenden Fahrzeug und die Geschwindigkeit des Nutzfahrzeugs gemeinschaftlich und/oder für gleiche oder überlappende Zeiten regeln. Beispielsweise können der Längsregelung die Führungsgröße des Abstands und die Führungsgröße der Geschwindigkeit zugrunde gelegt sein.

Die Kommunikationseinheit kann den Geschwindigkeitsverlauf oder Eckdaten (z. B. Parameter des Verlaufs), mit denen der Geschwindigkeitsverlauf im Nutzfahrzeug oder in jedem Fahrzeug bestimmt wird oder bestimmbar ist, empfangen und/oder senden. Alternativ oder ergänzend kann die Kommunikationseinheit Eigenschaften anderer oder aller Fahrzeuge des Fahrzeugverbands empfangen und/oder Eigenschaften des Nutzfahrzeugs senden. Auf Grundlage der empfangenen und/oder gesendeten Eigenschaften kann im Nutzfahrzeug oder jedem Fahrzeug jeweils der einheitliche Geschwindigkeitsverlauf bestimmt werden.

Die Kommunikationseinheit kann zur (beispielsweise bidirektionalen) Funkkommunikation mit dem vorausfahrenden Fahrzeug und/oder dem ersten Fahrzeug im Fahrzeugverband ausgebildet sein.

Der Ortsbezug des Geschwindigkeitsverlaufs kann die vorausliegende Fahrstrecke des Fahrzeugverbands umfassen.

Die Längsregelung kann mindestens einen Ist-Wert zu jeder der mindestens einen Führungsgröße numerisch bestimmen und/oder durch Sensoren erfassen. Beispielsweise kann die Längsregelung einen Ist-Wert des Abstands mittels Abstandssensoren erfassen. Die Abstandssensoren können einen Ultraschallsensor, einen Radarsensor und/oder eine Stereokamera umfassen. Der Abstandssensor kann an einer Fahrzeugfront des Nutzfahrzeugs angeordnet sein. Alternativ oder ergänzend kann die Längsregelung einen Ist-Wert der Geschwindigkeit mittels Drehzahlsensoren erfassen. Die Drehzahlsensoren können an einen Getriebeausgang oder an Radnaben gekoppelt sein.

Die Führungsgröße des variablen Abstands kann gerade so bestimmt sein, dass die Zeitdifferenz eingehalten wird. Ein Schwerpunkt der Längsregelung kann darauf gelegt sein, dass die Fahrzeuge des Fahrzeugverbands gleichermaßen mit der durch den ortsbezogenen Geschwindigkeitsverlauf vorgegebenen Geschwindigkeit fahren.

Funktionale Abhängigkeiten der Längsregelung (beispielsweise Abhängigkeiten zwischen der Führungsgröße der Geschwindigkeit, der Führungsgröße des Abstands und/oder dem ortsbezogenen Geschwindigkeitsverlauf) können unterschiedlich implementiert sein. Beispielsweise können die funktionalen Abhängigkeiten eine Proportionalität zwischen der Führungsgröße des Abstands und der durch den ortsbezogenen Geschwindigkeitsverlauf vorgegebenen Geschwindigkeit umfassen.

Die funktionalen Abhängigkeiten der Längsregelung können Nebenbedingungen umfassen. Die funktionalen Abhängigkeiten der Längsregelung können bedingt sein. Beispielsweise kann bei Empfang eines Signals zur synchronen Abbremsung des Fahrzeugverbands oder bei Unterschreiten eines Mindestabstands die Geschwindigkeit des Nutzfahrzeugs abweichend vom Geschwindigkeitsverlauf reduziert werden.

Für die Führungsgröße des Abstands kann ein einfacher (beispielsweise räumlich und zeitlich lokaler) Zusammenhang mit der durch den Geschwindigkeitsverlauf vorgegebenen Geschwindigkeit bestehen. Der Ort des Nutzfahrzeugs auf der Fahrstrecke oder dessen Abstand zum vorausfahrenden Fahrzeug kann durch nummerische Integration des Geschwindigkeitsverlaufs bestimmt werden.

Der Fahrzeugverband kann auch als Kolonne, Konvoi oder Geleit bezeichnet werden.

Der Fahrzeugverband hintereinanderfahrender Fahrzeuge kann zumindest für die vorausliegende Fahrstrecke bestehen. Eine zurückliegende Fahrstrecke und/oder eine über die vorausliegende Fahrstrecke hinausgehende Fahrstrecke können für die einzelnen Fahrzeuge des Fahrzeugverbands unterschiedlich sein. Beispielsweise kann der Fahrzeugverband für die vorausliegende Fahrstrecke zusammengeschlossen sein.

Eine Zugehörigkeit der Fahrzeuge zum Fahrzeugverband kann durch die Kommunikation des einheitlichen, ortsbezogenen Geschwindigkeitsverlaufs definiert sein. Beispielsweise können die Fahrzeuge des Fahrzeugverbands hinsichtlich Sicherheitsfunktionen miteinander kommunizieren und/oder (beispielsweise aufgrund der Kommunikation) mit Abständen zwischen den Fahrzeugen fahren, die geringer als reguläre Abstände (beispielsweise zwischen vergleichbaren Fahrzeugen außerhalb des Fahrzeugverbands) sind. Alternativ oder ergänzend können einzelne oder jedes nachfahrende Fahrzeug des Fahrzeugverbands in herkömmlicher Weise hinterherfahren, beispielsweise mit einer Abstandsregelung (auch: Adaptive Cruise Control oder ACC-Regelung), die erfindungsgemäß erweitert ist. Dabei können die Fahrzeuge mit herkömmlichen und gesetzlich zulässigen Abständen fahren und erweiterte Sicherheitsfunktionen sind dann nicht erforderlich.

Eine Führungsgröße des Abstands kann proportional zu der vom ortsbezogenen Geschwindigkeitsverlauf vorgegebenen Geschwindigkeit sein. Das Verhältnis zwischen der Führungsgröße des Abstands und der vorgegebenen Geschwindigkeit kann der Zeitdifferenz entsprechen. In einer ersten Implementierung kann die Führungsgröße des Abstands proportional zu der vom ortsbezogenen Geschwindigkeitsverlauf vorgegebenen Geschwindigkeit am Ort des Nutzfahrzeugs oder einem Ort zwischen dem Nutzfahrzeug und dem vorausfahrenden Fahrzeug sein.

Die Führungsgröße $d_{\text{soll}}$ des Abstands kann gleich $d_{\text{soll}}=v(x) \cdot T_{\text{konstant}}$ mit der konstanten Zeitdifferenz $T_{\text{konstant}}$ sein, wobei $v$ der ortsbezogene Geschwindigkeitsverlauf ist. Dabei kann $x$ der Ort des Nutzfahrzeugs (beispielsweise dessen Frontseite, Rückseite, Mitte oder Schwerpunkt) oder ein Ort zwischen dem Nutzfahrzeug und dem vorausfahrenden Fahrzeug sein.

Die Führungsgröße $d_{\text{soll}}$ des Abstands kann in einem Bereich (Abstandsbereich) geregelt werden. Der Abstandsbereich kann durch die Geschwindigkeiten des ortsbezogenen Geschwindigkeitsverlaufs im Ortsbereich zwischen dem Ort des Nutzfahrzeugs und des vorausfahrenden Fahrzeugs bestimmt sein. Beispielsweise kann für den Ortsbereich $[x_{\text{NF}}, x_{\text{VF}}]$ zwischen dem Ort des Nutzfahrzeugs, $x_{\text{NF}}$, und dem Ort des vorausfahrenden Fahrzeugs, $x_{\text{VF}}$, das Bild, $v([x_{\text{NF}}, x_{\text{VF}}])$, des ortsbezogenen Geschwindigkeitsverlaufs im Ortsbereich den Abstandsbereich bestimmen gemäß $v([x_{\text{NF}}, x_{\text{VF}}]) \cdot T_{\text{konstant}}$. Alternativ oder ergänzend kann die Längsregelung den Abstand $d=x_{\text{VF}}-x_{\text{NF}}$ in den Grenzen

$$\min_{x=x_{\text{NF}}..x_{\text{VF}}} v(x) \cdot T_{\text{konstant}} \quad \text{und} \quad \max_{x=x_{\text{NF}}..x_{\text{VF}}} v(x) \cdot T_{\text{konstant}}$$

regeln.

Eine Führungsgröße des Abstands kann proportional zu der vom ortsbezogenen Geschwindigkeitsverlauf vorgegebenen Geschwindigkeit sein, die über einen Ortsbereich zwischen dem Nutzfahrzeug und dem vorausfahrenden Fahrzeug gemittelt ist. In einer zweiten Implementierung, die mit der ersten Implementierung kombinierbar ist, kann die Führungsgröße des Abstands proportional zu einem Mittelwert der Geschwindigkeit (beispielsweise dem Mittelwert der Führungsgröße der Geschwindigkeit) sein. Die vorgegebene Geschwindigkeit kann über den Ortsbereich zeitlich gemittelt sein.

Beispielsweise kann die Führungsgröße $d_{\text{soll}}$ des Abstands gleich $d_{\text{soll}}=\tilde{v} \cdot T_{\text{konstant}}$ mit einem konstanten Zeitabstand $T_{\text{konstant}}$ sein, wobei $\tilde{v}$ der zeitliche Mittelwert des ortsbezogenen Geschwindigkeitsverlaufs $v(x)$ ist in einem Ortsbereich $[x_{\text{NF}}, x_{\text{VF}}]$ zwischen dem Ort des Nutzfahrzeugs, $x_{\text{NF}}$, und dem Ort des vorausfahrenden Fahrzeugs, $x_{\text{VF}}$.

Die Längsregelung kann eine Integration oder Summe des Kehrwerts der vom ortsbezogenen Geschwindigkeitsverlauf vorgegebenen Geschwindigkeit über den Abstand auf die konstante Zeitdifferenz regelt. In einer dritten Implementierung, die mit der ersten oder zweiten Implementierung kombinierbar ist, kann die Längsregelung den Abstand und/oder die Geschwindigkeit derart regeln, dass eine Integration oder Summe des Kehrwerts der vom ortsbezogenen Geschwindigkeitsverlauf vorgegebenen Geschwindigkeit (beispielsweise als die Führungsgröße der Geschwindigkeit) über den Abstand (beispielsweise der Führungsgröße des Abstands) gleich der konstanten Zeitdifferenz ist oder sich dieser annähert.

Die Längsregelung kann den Wert des Integrals oder der Summe entlang der Fahrstrecke auf die konstante Zeitdifferenz regeln (d.h. auf einen zeitunabhängigen und/oder ortsunabhängigen Wert). Beispielsweise kann die Längsregelung die Führungsgröße $d_{\text{soll}}$ des Abstands gemäß $t_{\text{konstant}} = \int_{x_{\text{NF}}}^{x_{\text{NF}}+d_{\text{Soll}}} \frac{\mathrm{d}x}{v(x)}$ bestimmen.

Das Bereitstellen des ortsbezogenen Geschwindigkeitsverlaufs kann ein Bestimmen des ortsbezogenen Geschwindigkeitsverlaufs im Nutzfahrzeug oder ein Empfangen des ortsbezogenen Geschwindigkeitsverlaufs von einem Fahrzeug des Fahrzeugverbands umfassen. Der ortsbezogene Geschwindigkeitsverlauf kann im Nutzfahrzeug ausgehend vom vorausfahrenden Fahrzeug oder ausgehend vom ersten Fahrzeug im Fahrzeugverband empfangen werden. Beispielsweise kann das erste Fahrzeug im Fahrzeugverband den ortsbezogenen Geschwindigkeitsverlauf bestimmen (z. B. vorausberechnen) und an alle Fahrzeuge im Fahrzeugverband kommunizieren.

Der ortsbezogene Geschwindigkeitsverlauf kann von einem Höhenverlauf der vorausliegenden Fahrstrecke des Fahrzeugverbands abhängig sein. Der Höhenverlauf der vorausliegenden Fahrstrecke kann topografische Daten einer elektronischen Karte umfassen oder auf deren Grundlage bestimmt werden. Der ortsbezogene Geschwindigkeitsverlauf kann auf Grundlage des Höhenverlaufs, beispielsweise gemäß Dokument DE 10 2008 023 135 A1, berechnet werden.

Alternativ oder ergänzend kann der ortsbezogene Geschwindigkeitsverlauf abhängig von den Eigenschaften der Fahrzeuge des Fahrzeugverbands berechnet werden. Die Eigenschaften können ein Rollvermögen, ein Antriebsvermögen und/oder ein rekuperierendes Bremsvermögen des jeweiligen Fahrzeugs umfassen.

Der ortsbezogene Geschwindigkeitsverlauf kann ferner von einem Rollvermögen, einem Antriebsvermögen und/oder einem rekuperierenden Bremsvermögen der einzelnen Fahrzeuge des Fahrzeugverbands abhängig sein oder abhängig von diesen Eigenschaften bestimmt werden. Der ortsbezogene Geschwindigkeitsverlauf kann bestimmt sein zur Minimierung der Antriebsenergie auf der vorausliegenden Fahrstrecke, beispielsweise unter Berücksichtigung der realisierbaren Längsdynamik aller Fahrzeuge aufgrund der Eigenschaften der Fahrzeuge.

Alternativ oder ergänzend kann die für das Nutzfahrzeug oder jedes einzelne Fahrzeug im Fahrzeugverband bestimmte Zeitdifferenz von den Eigenschaften, insbesondere vom Rollvermögen, vom Antriebsvermögen und/oder vom rekuperierenden Bremsvermögen, des jeweiligen Fahrzeugs abhängen.

Die Kommunikationseinheit kann ferner dazu ausgebildet sein, das Rollvermögen, das Antriebsvermögen und/oder das rekuperierende Bremsvermögen zu kommunizieren. Die Eigenschaften (beispielsweise das Rollvermögen, das Antriebsvermögen und/oder das rekuperierende Bremsvermögen) einzelner oder jedes Fahrzeugs kann kommuniziert, d. h. gesendet und/oder empfangen werden. Beispielsweise kann das Rollvermögen, das Antriebsvermögen und/oder das rekuperierende Bremsvermögen des Nutzfahrzeugs gesendet werden. Der auf Grundlage der Eigenschaften aller Fahrzeuge vorausberechnete ortsbezogene Geschwindigkeitsverlauf kann am Nutzfahrzeug empfangen werden.

Alternativ oder ergänzend können am Nutzfahrzeug die Eigenschaften der anderen Fahrzeuge des Fahrzeugverbands empfangen werden. Auf Grundlage der empfangenen Eigenschaften kann der ortsbezogene Geschwindigkeitsverlauf im Nutzfahrzeug vorausberechnet werden.

Der ortsbezogene Geschwindigkeitsverlauf kann die Summe der Antriebsenergien aller Fahrzeuge des Fahrzeugverbands auf der vorausliegenden Fahrstrecke minimieren, beispielsweise aufgrund der Eigenschaften aller Fahrzeuge des Fahrzeugverbands. Dabei kann die Antriebsenergie jedes Fahrzeugs zur Erfüllung des ortsbezogenen Geschwindigkeitsverlaufs von dessen Eigenschaften abhängen.

Der Abstand kann auf Schwerpunkte, Mittelpunkte, Vorderkanten, Frontflächen oder Endkanten der im Fahrzeugverband hintereinanderfahrenden Fahrzeuge bezogen sein. Der Begriff "Abstand" kann sich grundsätzlich auf den Abstand zwischen den Schwerpunkten, den Mittelpunkten, den Vorderkanten oder den Endkanten der im Fahrzeugverband hintereinanderfahrenden Fahrzeuge beziehen. Vorgenannte Punkte, Kanten oder Flächen können von einer Länge, einer Masse und/oder einer Anzahl von Anhängern des Nutzfahrzeugs abhängen. Die Längsregelung kann die Länge, die Masse und/oder die Anzahl der Anhänger erfassen. Beispielsweise kann das Nutzfahrzeug eine Sattelzugmaschine sein und die Längsregelung kann beim Aufsatteln (beispielsweise über eine Datenverbindung zum Sattelauflieger oder durch Erfassung einer Kodierung am Sattelauflieger) dessen Masse und/oder Länge erfassen.

Die Längsregelung kann den Abstand und eine Geschwindigkeit des Nutzfahrzeugs regeln. Dabei kann die durch den ortsbezogenen Geschwindigkeitsverlauf am Ort $x_{NF}$ des Nutzfahrzeugs vorgegebene Geschwindigkeit $v(x_{NF})$ eine Führungsgröße für die Geschwindigkeit des Nutzfahrzeugs sein.

Die Längsregelung kann weiteren Bedingungen unterliegen. Die Längsregelung kann den Abstand gemäß weiteren Bedingungen regeln. Beispielsweise kann die Längsregelung einen Mindestabstand und/oder einen Maximalabstand einhalten.

Bei einem Ist-Abstand, der größer als der Mindestabstand ist, kann die Längsregelung den Abstand und/oder die Geschwindigkeit aufgrund des ortsbezogenen Geschwindigkeitsverlaufs regeln. Bei einem Ist-Abstand, der kleiner als der Mindestabstand ist, kann die Längsregelung, die durch den ortsbezogenen Geschwindigkeitsverlauf am Ort des Nutzfahrzeugs vorgegebene Geschwindigkeit $v(x_{NF})$ unterschreiten. Bei einem Ist-Abstand, der größer als der Maximalabstand ist, kann die Längsregelung, die durch den ortsbezogenen Geschwindigkeitsverlauf am Ort des Nutzfahrzeugs vorgegebene Geschwindigkeit $v(x_{NF})$ überschreiten.

Die Längsregelung des Nutzfahrzeugs kann die Geschwindigkeit des Nutzfahrzeugs so regeln, dass eine Abweichung zwischen der Geschwindigkeit des Nutzfahrzeugs (d. h. der Ist-Geschwindigkeit) und der vom ortsbezogenen Geschwindigkeitsverlauf am Ort des Nutzfahrzeugs vorgegeben Geschwindigkeit (d. h. der Soll-Geschwindigkeit) kleiner ist als die entsprechende Abweichung beim vorausfahrenden Fahrzeug (d. h. die Abweichung zwischen der Ist-Geschwindigkeit des vorausfahrenden Fahrzeugs und der durch die Geschwindigkeitsverteilung am Ort des vorausfahrenden Fahrzeugs bestimmten Geschwindigkeit). Alternativ oder ergänzend kann die Längsregelung des Nutzfahrzeugs, bezogen auf das vorausfahrende Fahrzeug und/oder ein nachfahrendes Fahrzeug, eine Abweichung des Ist-Abstand vom durch den Geschwindigkeitsverlauf und die Zeitdifferenz bestimmten Soll-Abstand, eine Abweichung der Ist-Geschwindigkeit von der durch den Geschwindigkeitsverlauf bestimmten Soll-Geschwindigkeit, eine Abweichung des Antriebsvermögens vom kommunizierten Antriebsvermögen und/oder eine Abweichung des Rollvermögens vom kommunizierten Rollvermögen bei der Längsregelung des Nutzfahrzeugs korrigieren.

Ferner kann die Vorrichtung eine Berechnungseinheit umfassen, die dazu ausgebildet ist, abhängig von Eigenschaften des Nutzfahrzeugs (insbesondere dem Rollvermögen, Antriebsvermögen und/oder rekuperierenden Bremsvermögen des Nutzfahrzeugs) einen fahrzeug-optimierten Geschwindigkeitsverlauf und/oder einen fahrzeug-optimierten Abstandsverlauf des Nutzfahrzeugs für einen Abschnitt der vorausliegenden Fahrstrecke vorauszuberechnen. Dabei kann die Vorausberechnung des fahrzeug-optimierten Geschwindigkeitsverlaufs und/oder des fahrzeug-optimierten Abstandsverlaufs mit der Randbedingung erfolgen, dass jeweils am Anfang und am Ende des Abschnitts der resultierende Abstand und/oder die resultierende Geschwindigkeit übereinstimmt mit der durch den einheitlichen, ortsbezogenen Geschwindigkeitsverlauf vorgegebenen Führungsgröße des Abstands beziehungsweise der durch den einheitlichen, ortsbezogenen Geschwindigkeitsverlauf vorgegebenen Führungsgröße der Geschwindigkeit. Der Abschnitt kann einen Anstieg, einen Abhang, eine Kuppe und/oder eine Senke der vorausliegenden Fahrstrecke umfassen.

Die Kommunikationseinheit des Nutzfahrzeugs kann ferner einen Bereich für die konstante Zeitdifferenz bereitstellt. Die Längsregelung kann die konstante Zeitdifferenz innerhalb des Bereichs festlegen, beispielsweise in Abhängigkeit von Eigenschaften des Nutzfahrzeugs. Die konstante Zeitdifferenz kann (z. B. abschnittsweise) abhängig vom Rollvermögen, Antriebsvermögen und/oder rekuperierenden Bremsvermögen des Nutzfahrzeugs für einen fahrzeug-optimierten Geschwindigkeitsverlauf und/oder einen fahrzeug-optimierten Abstandsverlauf des Nutzfahrzeugs bestimmt werden.

Die Längsregelung des Nutzfahrzeugs kann für mehrere Abschnitte der vorausliegenden Fahrstrecke jeweils die konstante Zeitdifferenz festlegen. Die Abschnitte können jeweils einen Anstieg, ein Gefälle, eine Kuppe und/oder eine Senke umfassen. Die Zeitdifferenz kann die Antriebsenergie des Nutzfahrzeugs minimieren, beispielsweise unter Berücksichtigung dessen Rollvermögens, Antriebsvermögens und/oder rekuperierenden Bremsvermögens.

Die Längsregelung kann dazu ausgebildet sein, den Abstand auf Grundlage des ortsbezogenen Geschwindigkeitsverlaufs zu regeln, wenn die Geschwindigkeit des Nutzfahrzeugs größer als eine Mindestgeschwindigkeit ist. Wenn die Geschwindigkeit des Nutzfahrzeugs kleiner als die Mindestgeschwindigkeit ist, kann der Abstand auf den Mindestabstand geregelt sein. Die Mindestgeschwindigkeit kann (beispielsweise gemäß der funktionalen Abhängigkeit der Längsregelung zwischen Abstand und Geschwindigkeit) durch den Mindestabstand bestimmt sein.

Ein weiterer Aspekt der Erfindung betrifft ein Verfahren zur Herstellung und/oder Konfiguration eines Nutzfahrzeugs. Das Verfahren umfasst die Installation und/oder Konfiguration einer Kommunikationseinheit und einer Längsregelung gemäß dem vorstehenden Aspekt. Das Verfahren kann ferner Schritte des Bereitstellens eines oder mehrerer Merkmale gemäß dem vorgenannten Aspekt umfassen.

Ferner betrifft die Erfindung ein Nutzfahrzeug, das mit einer Vorrichtung zur Längsregelung gemäß einer Ausgestaltung des erstgenannten Aspekts ausgestattet ist.

Das Nutzfahrzeug, oder jedes Fahrzeug des Verbands, kann insbesondere ein Lastkraftwagen (LKW), ein Zugfahrzeug (beispielsweise der LKW in einem LKW-Gespann oder eine Sattelzugmaschine) oder ein Bus (beispielsweise für den Stadtverkehr, Nahverkehr oder Fernverkehr) sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:

Figur 1    eine schematische Seitenansicht eines Fahrzeugverbands;

Figur 2    ein schematisches Blockschaltbild eines Ausführungsbeispiels einer Vorrichtung zur Längsregelung eines Nutzfahrzeugs;

Figur 3    ein Flussdiagramm eines Verfahrens zur Längsregelung eines Nutzfahrzeugs;

Figur 4    schematische Diagramme mit ortsbezogenen Verläufen der Höhe und der Geschwindigkeit entlang einer Fahrstrecke; und

Figur 5    schematische Diagramme mit Führungsgrößen der Geschwindigkeit und des Abstands.

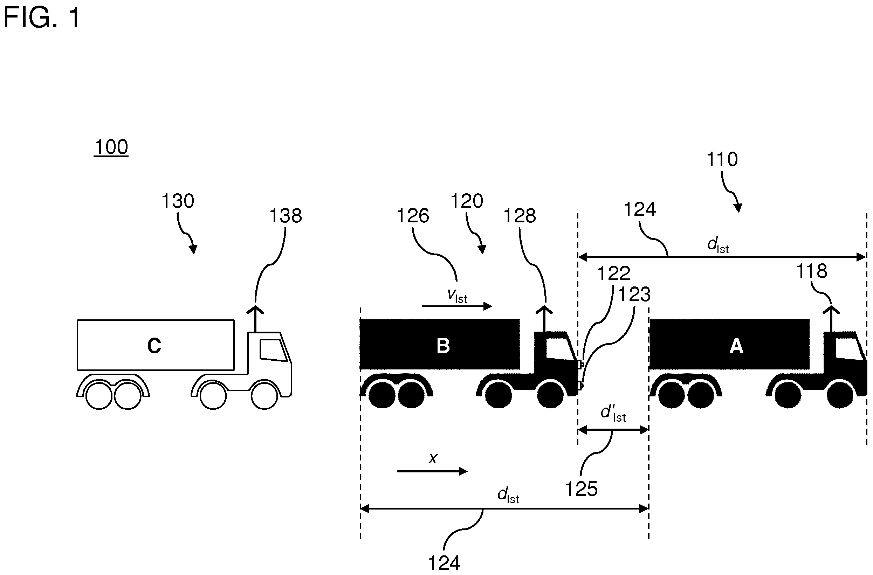

Figur 1 zeigt schematisch eine Darstellung eines beispielhaften und allgemein mit Bezugszeichen 100 bezeichneten Fahrzeugverbands. Der Fahrzeugverband 100 umfasst mindestens ein vorausfahrendes Fahrzeug 110 und ein nachfahrendes Nutzfahrzeug 120. Optional umfasst der Fahrzeugverband 100 mindestens ein weiteres Fahrzeug 130, wobei in nachfolgender Beschreibung eine Technik zur Längsregelung ohne Beschränkung aus der Perspektive des Fahrzeugs 120 beschrieben wird. Ferner ist die nachfolgende Beschreibung anhand der drei Fahrzeuge 110, 120 und 130 beispielhaft. Der Fahrzeugverband 100 kann mehr als drei Fahrzeuge umfassen.

Das Fahrzeug 120 umfasst in Fahrtrichtung messende Abstandssensoren, beispielsweise eine Stereokamera

122 und/oder einen Radarsensor 123. Das Fahrzeug 120 ist dazu ausgerüstet, einen Ist-Abstand 124 zum vorausfahrenden Fahrzeug 110 zu bestimmen. Im Folgenden bezieht sich der Abstandsbegriff auf den Abstand zwischen Schwerpunkten der Fahrzeuge. Alternativ kann sich der Abstand auf das Fahrzeugende jedes Fahrzeugs oder die Fahrzeugfront jedes Fahrzeugs beziehen, wie in Figur 1 gezeigt. In allen Fällen kann der Abstand aus dem (beispielsweise mittels der Abstandssensoren 122 und 123 bestimmten) Zwischenabstand 125, d. h. dem Abstand zwischen den Fahrzeugen 110 und 120, bestimmt werden durch Addition der jeweiligen Fahrzeuglänge.

Ferner ist das Fahrzeug 120 dazu ausgerüstet, seine Ist-Geschwindigkeit 126 zu bestimmen. Im Folgenden bezieht sich der Geschwindigkeitsbegriff auf die Geschwindigkeit gegenüber der Fahrbahn.

Jedes Fahrzeug 110, 120 und 130 umfasst eine Kommunikationsantenne 118, 128 beziehungsweise 138. Diese kann Teil einer sicherheitsrelevanten Kommunikation für Fahrten mit reduzierten Zwischenabständen 125 sein (Platoon-Fahrten). Für miteinander über eine Funkverbindung vernetzte Fahrzeuge 110, 120 und 130 kann eine hohe Sicherheit erreicht werden, da dicht aufeinanderfolgende Fahrzeuge zeitgleich automatisiert abgebremst werden können. Zukünftig werden, beispielsweise unter bestimmten Randbedingungen wie Vernetzung, automatisierte Längs- und/oder Querregelung und Sicherheitsnachweis, Platoon-Fahren mit reduziertem Zwischenabstand zugelassen. Die Technik ist jedoch nicht auf Platoon-Fahrten beschränkt. Die Technik kann vielmehr bei jeder direkten oder indirekten Kommunikation zwischen hintereinanderfahrenden Fahrzeugen eingesetzt werden, beispielsweise bei Fahrzeugen mit einem Zugang zu einem Mobilfunknetz.

Fahren schwere Nutzfahrzeuge in hügeligem Gelände, so kann erheblich Kraftstoff (oder allgemein Energie für Antriebe ohne Brennkraftmaschine) eingespart werden, wenn die Geschwindigkeit des Fahrzeugs nicht durchgehend konstant gehalten wird, sondern wenn ortsabhängig (insbesondere situationsabhängig) z. B. durch Ausrollen vor einer Kuppe eine kleinere Geschwindigkeit oder durch Schwungaufbau am Gefälleende eine größere Geschwindigkeit zugelassen wird. Eine Technik zur Nutzung dieses Potentials ist beispielsweise im Dokument DE 10 2008 023 135 beschrieben. Auch eine situationsabhängig erhöhte Antriebsleistung und dadurch temporär erhöhte Geschwindigkeit kann zu einer Kraftstoffeinsparung beitragen.

Fahren viele, beispielsweise gleichartige, Fahrzeuge 110, 120 und 130 in einem hinreichend langen Fahrzeugverband 100 hintereinander, steht eine herkömmliche Abstandsregelung, die den Zwischenabstand 125 (und somit den Abstand 124) konstant hält, einer solchen ortsabhängigen Kraftstoffeinsparung entgegen, da alle Fahrzeuge 110, 120 und 130 des Fahrzeugverbands 100 zeitgleich eine Geschwindigkeitsänderung vornehmen, die nur bei dem einen Fahrzeug 110, das die Geschwindigkeitsänderung zu seinem Vorteil veranlasst hat, zu einer Kraftstoffeinsparung führt. Der Kraftstoffverbrauch der anderen Fahrzeuge 120 und 130 des Fahrzeugverbands 100 kann sich durch die für deren Ort unpassende Geschwindigkeitsänderung sogar vergrößern.

Beispielsweise an Orten, an denen ein einzeln fahrendes Fahrzeug eine Geschwindigkeitsänderung aufgrund einer ortsfesten Situation, z. B. einer Kuppe, vornehmen könnte zur Kraftstoffeinsparung, führt dieselbe Geschwindigkeitsänderung im Fahrzeugverband 100 für alle Fahrzeuge vor und hinter der Kuppe zu einem Mehrverbrauch, der den gesamten Kraftstoffverbrauch des Fahrzeugverbands 100 vergrößert. Insbesondere steht eine herkömmliche Abstandsregelung bei topografischen Änderungen auf Abschnitten der Fahrstrecke, die von ähnlicher Länge wie der Fahrzeugverband 100 oder der Fahrzeugabstand 124 sind, einer geschwindigkeitsabhängigen Verbrauchsoptimierung entgegen.

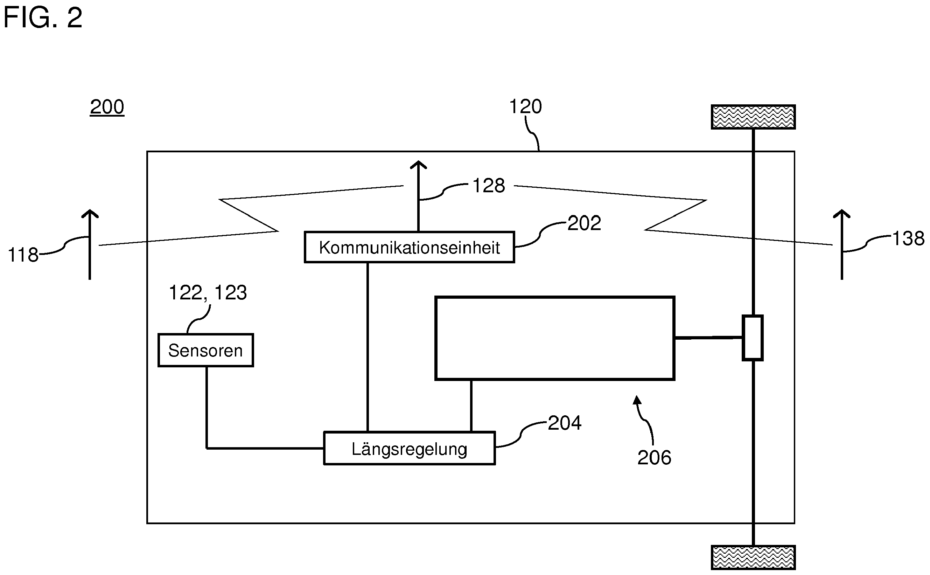

Figur 2 zeigt ein schematisches Blockschaltbild eines Ausführungsbeispiels einer Vorrichtung 200 zur Längsregelung des Nutzfahrzeugs 120 im Fahrzeugverband. Die Vorrichtung 200 umfasst eine Kommunikationseinheit 202 und eine Längsregelung 204. Die Längsregelung 204 steuert beispielsweise das Antriebs- und/oder Bremsmoment eines Antriebsstrangs 206. Der Antriebsstrang 206 kann eine Brennkraftmaschine, eine Elektromaschine oder einen Hybridantrieb mit Brennkraftmaschine und Elektromaschine umfassen. Das Bremsmoment kann durch einen rekuperierenden Betrieb der Elektromaschine oder eine andere Dauerbremse des Antriebsstrangs 206 erzeugt werden.

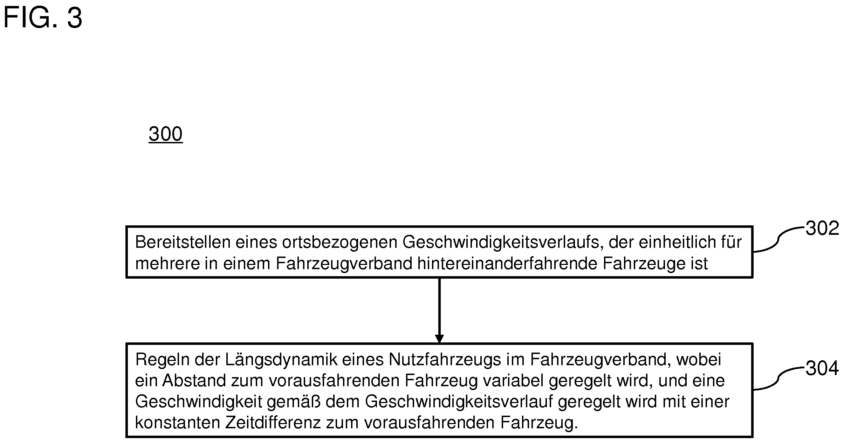

Figur 3 zeigt Schritte eines Verfahrens 300 zur Längsregelung des Nutzfahrzeugs 120, die von der Vorrichtung 200 ausgeführt oder gesteuert werden. Die Kommunikationseinheit 202 stellt im Schritt 302 einen ortsbezogenen Geschwindigkeitsverlauf bereit, der für mehrere Fahrzeuge im Fahrzeugverband 100, beispielsweise alle Fahrzeuge oder alle gleichartigen Fahrzeuge, einheitlich ist. Die Gleichartigkeit kann dabei anhand von Eigenschaften der Fahrzeuge bestimmt sein. Die Eigenschaften können beispielsweise das Antriebsvermögen, das Rollvermögen, das rekuperierende Bremsvermögen und/oder die Gesamtmasse einschließlich Ladung umfassen.

Der für den Fahrzeugverband 100 einheitliche, ortsbezogene Geschwindigkeitsverlauf kann abhängig von den Eigenschaften der Fahrzeuge 110, 120 und 130 des Fahrzeugverbands 100 bestimmt werden. Das Antriebsvermögen, das Bremsvermögen und/oder das Rollvermögen können Eigenschaften des jeweiligen Fahrzeugs sein (beispielsweise unter Berücksichtigung seiner jeweiligen Masse und/oder Ladung). Das Antriebsvermögen, das Bremsvermögen und das Rollvermögen können jeweils (beispielsweise positive bzw. negative) Beschleunigungen sein, die beispielsweise durch Zahlenwerte bezogen auf eine Länge pro Zeit zum Quadrat (beispielsweise die Einheit $m/s^2$) für eine horizontale Fahrbahn bestimmt sind. Daraus und aus der Masse des Fahrzeugs kann unter Berücksichtigung des von der Fahrbahnlängsneigung abhängigen Anteils der Schwerkraft der den Kraftstoffeinsatz reduzierende oder minimierende Geschwindigkeitsverlauf als Funktion des Orts bestimmt werden.

Der einheitliche, ortsbezogene Geschwindigkeitsverlauf ist ein möglichst für alle Fahrzeuge 110, 120 und 130 des Fahrzeugverbands 100 geeignetes, sinnvolles, verbrauchssparendes Geschwindigkeitsprofil. Beispielsweise kann der einheitliche, ortsbezogene Geschwindigkeitsverlauf durch (z. B. ortsweise) Mittelung einzelner fahrzeug-optimaler Geschwindigkeitsverläufe bestimmt werden. Die fahrzeug-optimalen Geschwindigkeitsverläufe können den Verbrauch des jeweiligen Fahrzeugs optimieren. Alternativ kann der einheitliche, ortsbezogene Geschwindigkeitsverlauf durch Minimierung der Summe der Kraftstoffverbräuche der einzelnen Fahrzeuge 110, 120 und 130 bestimmt werden, beispielsweise unter der Nebenbedingung einer vorgegebenen Durchschnittsgeschwindigkeit des Fahrzeugverbands 100.

Im Schritt 304 regelt die Längsregelung 204 den Abstand 124 nach der konstanten Zeitdifferenz und die Geschwindigkeit 126 nach dem einheitlichen, ortsbezogenen Geschwindigkeitsverlauf. Die Fahrzeuge 110, 120 und 130 des Fahrzeugverbands 100 fahren also nach einem örtlich einheitlichen und zeitlich um die konstante Zeitdifferenz versetzten Geschwindigkeitsprofil. Als Folge bildet sich ein für die Fahrzeuge unterschiedlicher und zeitlich variabler Abstand 124 zwischen aufeinanderfolgenden Fahrzeugen aus.

Im Folgenden wird die Bestimmung von Führungsgrößen (beispielsweise die Vorausberechnung eines zeitlichen Verlaufs) für Abstand 124 und Geschwindigkeit 126 im Kontext der Längsregelung 204 beschrieben. Die Bestimmung kann auch in einer separaten Berechnungseinheit implementiert sein, welche die Führungsgrößen an die Längsregelung 204 ausgibt.

Die Längsregelung 204 ermittelt den variablen Abstand 124 zwischen den Fahrzeugen gerade so, dass alle (beispielsweise gleichartigen) Fahrzeuge 110, 120 und 130 des Fahrzeugverbands 100 die ortsabhängige Geschwindigkeit passend zur örtlichen Situation nutzen. Dazu wird die Führungsgröße des variablen Abstands 124 gerade so bestimmt, dass die feste Zeitdifferenz zwischen den Schwerpunkten der Fahrzeuge eingehalten wird.

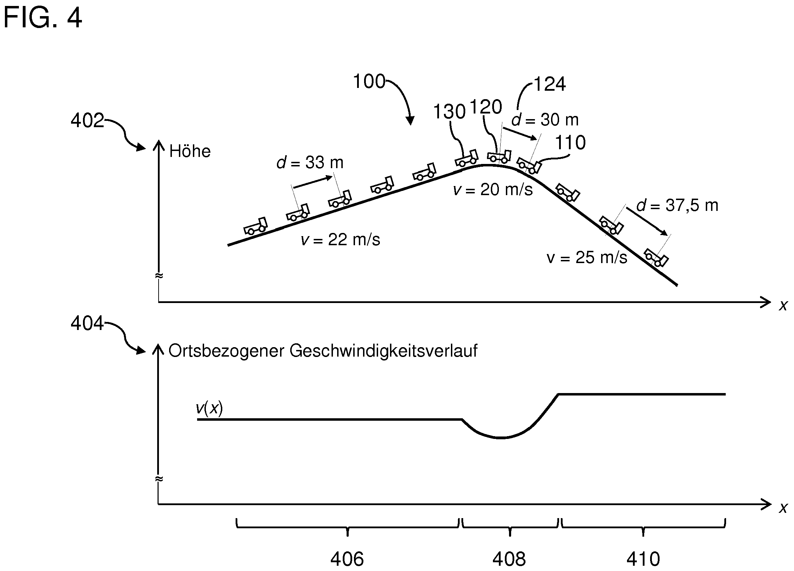

Figur 4 zeigt schematisch ein Beispiel zur Bestimmung des einheitlichen, ortsbezogenen Geschwindigkeitsverlaufs 404 (auch: Geschwindigkeitsprofil) auf Grundlage eines Höhenverlaufs 402 der vorausliegenden Fahrstrecke (die jeweils auf der horizontalen Achse in Figur 4 abgetragen ist). In einem ersten Abschnitt 406 der Fahrstrecke steigt die Höhe 402 im Wesentlichen linear mit der Weglänge an und der zugehörige Geschwindigkeitsverlauf 404 wird bis vor dem Erreichen eines zweiten Abschnitts 408 mit einer Kuppe in der Fahrstrecke bei einem konstanten ersten Geschwindigkeitswert gehalten. Beispielsweise für einen Rollbetrieb im Abschnitt 408 wird ab dem Erreichen des Kuppenabschnitts 408 eine bis kurz nach dem Erreichen des Scheitelpunkts der Kuppe abnehmende Geschwindigkeit und eine nach der Kuppe zunehmende Geschwindigkeit durch den Verlauf 404 vorgegeben. Der zweite Abschnitt 408 ist nicht symmetrisch zum Scheitelpunkt der Kuppe. Das Ende des zweiten Abschnitts 408 liegt bei einer geringeren Höhe als der Anfang des zweiten Abschnitts 408, so dass der am Ende des Abschnitts 408 erreichte zweite Geschwindigkeitswert größer ist als der erste Geschwindigkeitswert. Der zweite Geschwindigkeitswert wird entlang eines Gefälles im Abschnitt 410 beibehalten.

Entsprechende verbrauchsgünstige ortsbezogene Geschwindigkeitsverläufe 404 werden bei anderen Höhenverläufen 402 bestimmt. Im Allgemeinen liegt für eine beliebige Fahrtstrecke ein Geschwindigkeitsprofil $v(x)$ vor, das ein verbrauchsgünstiges Befahren durch die Fahrzeuge 110, 120 und 130 eines Fahrzeugverbands 100 ermöglicht.

Genauer beträgt bei dem in Figur 4 dargestellten Beispiel die Länge jedes Fahrzeugs 17 m und die konstante Zeitdifferenz beträgt 1,5 s. Alle Fahrzeuge (eines Fahrzeugverbands beliebiger Gesamtlänge) fahren solang sie jeweils auf einer leichten Steigung im Abschnitt 406 sind mit einer Geschwindigkeit $v$ = 22 m/s und mit Abständen d = 33 m (d. h. 17 m aufgrund der Länge des Nutzfahrzeugs 120 und 16 m für den Zwischenabstand 125).

An der Kuppe im Abschnitt 408 nutzt jedes Fahrzeug seinen Schwung und reduziert am Scheitelpunkt der Kuppe die Geschwindigkeit auf 20 m/s. Bei einer Implementierung mit linearem Zusammenhang zwischen der Führungsgröße des Abstands 124 und der Führungsgröße der Geschwindigkeit 126 kann der Abstand d = 30 m betragen (d. h. 17 m Fahrzeuglänge plus 13 m Zwischenabstand 125).

Im nachfolgenden Abschnitt 410 fährt jedes Fahrzeug am Gefälle mit einer Geschwindigkeit $v$ = 25 m/s und einem Abstand d = 37,5 m (d. h. 17 m Fahrzeuglänge plus 20,5 m Zwischenabstand 125).

In einer ersten Implementierung der Längsregelung 204 wird für jeden Wegpunkt x der Fahrstrecke aus dem Geschwindigkeitsprofil $v(x)$ ein Soll-Abstand $d_{Soll}(x)$ berechnet als variable Führungsgröße des Abstands 124 zwischen den Fahrzeugschwerpunkten, beispielsweise gemäß der Gleichung

$$d_{\mathrm{Soll}}(x) = v(x) \cdot T_{\mathrm{konstant}} \tag{1}$$

mit der konstanten Zeitdifferenz $T_{\mathrm{konstant}}$.

Jedes nachfahrende Fahrzeug 120 oder 130 des Fahrzeugverbands 100 kann einen solchen Soll-Abstand (eventuell mit einer fahrzeug-individuellen Zeitdifferenz) durch Vergleich mit dem tatsächlich gemessenen aktuellen Abstand 124 zum vorausfahrenden Fahrzeug 120 bzw. 110 einregeln.

In einer Variante der ersten Implementierung wird aufgrund des ortsbezogenen Geschwindigkeitsverlaufs $v(x)$ ein Ortsverlauf $x(t+T)$ vorausberechnet, wobei der freie Parameter, T, der Berechnung in Erfüllung der konstanten

Zeitdifferenz, $T_{konstant}$, bestimmt wird. Beispielsweise sind die Orte der Schwerpunkte zweier hintereinanderfahrenden Fahrzeuge 110 und 120 durch $x_A=x(t+T_{konstant})$ bzw. $x_B=x(t)$ vorausberechnet. Entsprechend ist es jedem Fahrzeug im Fahrzeugverband 100 möglich, gemäß der Vorgabe des einheitlichen, ortsbezogenen Geschwindigkeitsverlaufs 404 mit einer (beispielsweise fahrzeug-individuellen) Zeitdifferenz $T_{konstant}$ im Fahrzeugverband 100 zu fahren.

In der Variante der ersten Implementierung entspricht die für das Fahrzeug 120 zumindest abschnittsweise konstante Zeitdifferenz $T_{konstant}$ einer variablen Führungsgröße

$$d_{Soll} = x(t+T_{konstant})\text{-}x(t) \quad \text{mit} \quad dx(t)/dt = v(x(t)) \qquad\qquad (2)$$

für den Abstand 124.

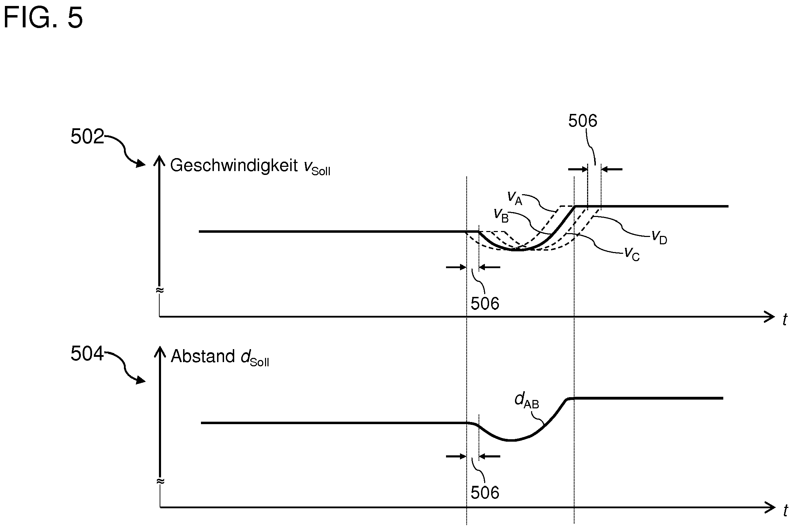

Figur 5 zeigt schematisch, aufbauend auf den Verläufen der Figur 4, Beispiele der Führungsgröße 502 für die Geschwindigkeit und der Führungsgröße 504 für den Abstand. Die schematische Darstellung der Figur 5 ist nicht auf die erste Implementierung oder deren Variante beschränkt und kann auch mit weiteren Implementierungen der Längsregelung 204 realisiert werden.

Die in Figur 5 gezeigten zeitbezogenen Verläufe 502 und 504 für Geschwindigkeit bzw. Abstand werden von allen Fahrzeugen eines beliebig langen Fahrzeugverbands 100 einheitlich gemäß dem ortsbezogenen Geschwindigkeitsverlauf $v(x)$ der Figur 4 genutzt. Dabei nutzen die einzelnen Fahrzeuge angepasst an eine ortsfeste Situation (die hier beispielhaft eine Kuppe ist) identische Führungsgrößen, die von Fahrzeug zu Fahrzeug der Zeitdifferenz entsprechend zeitversetzt in der Längsregelung 204 des jeweiligen Fahrzeugs angewandt werden.

Die Führungsgröße 502 der Geschwindigkeit 126 (dargestellt mit durchgezogener Linie als $v_B$ des Fahrzeugs 120 ist gegenüber der entsprechenden Führungsgröße des vorausfahrenden Fahrzeugs 110 um die konstante Zeitdifferenz 506 zeitlich verzögert. Die Führungsgröße 504 des Abstands 124 am Ort $x_B$ des Fahrzeugs 120 kann durch $v(x_B)\cdot T_{konstant}$ gemäß Gleichung (1) der ersten Implementierung bestimmt sein, oder in der Variante der ersten Implementierung gemäß Gleichung (2). Dabei kann die Gleichung (2) aufgrund des Mittelwertsatzes zumindest näherungsweise durch

$$d_{Soll} = v(\tilde{x}) \cdot T_{konstant} \qquad\qquad (2')$$

mit einem Ort $\tilde{x}$ zwischen den Orten $x_A$ und $x_B$ der Fahrzeuge 110 bzw. 120 implementiert sein.

Eine zweite Implementierung der Längsregelung 204 regelt den Abstand 124 auf die Führungsgröße 504 gemäß

$$d_{Soll} = \tilde{v} \cdot T_{konstant}, \qquad\qquad (3)$$

wobei $\tilde{v}$ der zeitliche Mittelwert des (aufgrund der Kommunikation bekannten zukünftigen) Geschwindigkeitsverlaufs 404 im Zwischenraum $[x_B, x_A]$ ist. Im Ergebnis kann, insbesondere in der zweiten Implementierung, der Zeitabstand $T_{konstant}$ als Führungsgröße für den Abstand 124 dienen. Optional wird die Geschwindigkeit 126 mit dem Geschwindigkeitsverlauf 404 als sekundäre Führungsgröße 502 geregelt.

Der in der unteren Blatthälfte schematisch gezeigte Verlauf des Soll-Abstands 504 ist ein Beispiel für die zweite Implementierung, bei der die Führungsgröße 504 am Anfang und Ende des durch die Zeitdifferenz 506 bestimmten Zeitfensters glatt (z. B. stetig differenzierbar) ist im Gegensatz zur Führungsgröße 502 der Geschwindigkeit (die nicht notwendigerweise glatt ist).

Vorstehende Implementierungen der Längsregelung sind kombinierbar und variierbar. Insbesondere kann die Längsregelung 204 den Abstand 124 und die Geschwindigkeit 126 gemeinsam regeln. Beispielsweise kann die Geschwindigkeit 126 des Fahrzeugs 120 mit der Führungsgröße 502 gemäß der einheitlichen Geschwindigkeitsvorgabe $v(x_B)$ regelt werden. Zugleich kann der Abstand 124 gemäß Gleichung (1), (2), (2'), (3) und/oder einer anderen funktionalen Abhängigkeit geregelt werden. Beispielsweise kann der Abstand 124 in einem Abstandsbereich geregelt werden mit einer Zeitkonstante $T_{konstant}$, wobei der Abstandsbereich $[min\ v(\tilde{x})\cdot T_{konstant}, max\ v(\tilde{x})\text{-}T_{konstant}]$ durch die Schwan-kungsbreite der Geschwindigkeitsvorgabe $v(\tilde{x})$ im Zwischenraum, d. h. unter allen $\tilde{x}$ in $[x_B, x_A]$, bestimmt ist.

Im Zusammenhang mit jeder Implementierung kann der einheitliche, ortsbezogene Geschwindigkeitsverlauf 404 abhängig von Fahrzeugeigenschaften (z. B. dem Rollverhalten) aller Fahrzeuge vorausberechnet werden. Dazu können die Fahrzeugeigenschaften (z. B. über die Funkverbindung der Kommunikationseinheit 202) ausgetauscht werden, beispielsweise als Teil des Schritts 302. Durch die Berücksichtigung der Fahrzeugeigenschaften kann für alle Fahrzeuge im Fahrzeugverband 100 eine ortsabhängig angepasste Geschwindigkeitsänderung durchgeführt werden.

Der ortsbezogene Geschwindigkeitsverlauf 404 wird passend zum bekannten Höhenprofil (oder Steigungsprofil) der vorausliegenden Fahrstrecke vorausberechnet. Der ortsbezogene Geschwindigkeitsverlauf 404 bietet für alle Fahrzeuge des Fahrzeugverbands 100 zumindest keine Verbrauchsnachteile und nach Möglichkeit Verbrauchsvorteile. Die Geschwindigkeitsänderung gemäß dem ortsbezogenen Geschwindigkeitsverlauf 404 kann vorausberechnet werden zur Kraftstoffreduktion, beispielsweise gemäß dem Dokument DE 10 2013 011 549.

Jedes Fahrzeug des Fahrzeugverbands 100 erhält im Schritt 302 (soweit es nicht selbst Quelle des Geschwindigkeitsverlaufs 404 ist), z. B. über die Funkverbindung der Kommunikationseinheit 202, den für alle Fahrzeuge gültigen, vorausberechneten, ortsbezogenen Geschwindigkeitsverlauf 404.

Vorzugsweise umfasst die Längsregelung 204 nicht ausschließlich eine Geschwindigkeitsregelung, da der ausschließliche Einsatz einer Geschwindigkeitsregelung bei jedem Fahrzeug des Fahrzeugverbands 100 aufgrund von unvermeidlichen Störeinflüssen typischerweise zu nicht tolerierbaren Abweichungen im Abstand 124 führt. Vorzugsweise umfasst die Längsregelung 204 mindestens eine Abstandsregelung und optional eine Geschwindigkeitsregelung.

Jedes Fahrzeug des Fahrzeugverbands 100 berechnet aus dem ortsbezogenen Geschwindigkeitsverlauf 404 den (beispielsweise ortsbezogenen) Soll-Abstand 504 zum vorausfahrenden Fahrzeug, beispielsweise anhand einer der Gleichungen (1), (2), (2') oder (3). Die Gleichung (1) zeichnet sich durch einen lokalen (und damit besonders einfachen und numerisch robusten) Zusammenhang zwischen den Führungsgrößen für Geschwindigkeit und Abstand aus.

Die Zeitdifferenz 506 für jedes Fahrzeug ist ein (zumindest abschnittsweise) konstanter Parameter. Die Zeitdifferenz 506 ist mindestens so groß bestimmt, dass bei der kleinsten Geschwindigkeit im ortsbezogenen Geschwindigkeitsverlauf 404 ein ausreichender Zwischenabstand 125 (z. B. der Mindestabstand) eingehalten wird.

Jedes Fahrzeug regelt den Abstand zu seinem Vorderfahrzeug entsprechend dem jeweils ermittelten Sollwert $d_{Soll}$ für seinen aktuellen Ort ein. Für eine hochwertige Längsregelung 204 kann zusätzlich der bekannte, geplante, also vorausliegende Verlauf des Abstands $d_{Soll}(x)$ und/oder der Geschwindigkeit $v_{Soll}(x)$ der Längsregelung 204 zugrunde liegen.

Die Längsregelung 204 ist optional so ausgelegt, dass nicht nur der tatsächliche Abstand des Fahrzeugs 120 zum Vorderfahrzeug 110 durch die negative Rückkopplung einer Abweichung korrigiert wird. Vielmehr korrigiert die Längsregelung 204 des Fahrzeugs 130 gleichzeitig auch den (unvermeidlichen) Fehler des Ist-Werts der Geschwindigkeit 126 gegenüber dem Soll-Wert 502 aus dem Geschwindigkeitsverlauf 404 und wirkt damit stabilisierend auf die Längsregelung der hinteren Fahrzeuge 130 ein.

In einer weiteren, besonders hochwertigen Ausführung berücksichtigt die Längsregelung 204 in jedem Fahrzeug die Regelabweichung (beispielsweise für Abstand und/oder Geschwindigkeit) und/oder die Dynamik (beispielsweise die Fahrzeugeigenschaften) des vorausfahrenden und/oder nachfahrenden Fahrzeugs. Zur Klarheit der Beschreibung und ohne Beschränkung der Technik kann die Längsregelung des Fahrzeug 130 seinen Abstand zum vorausfahrenden Fahrzeug 120 vergrößern, falls dessen Abstand 124 zum Fahrzeug 110 kleiner als der für das vorausfahrenden Fahrzeug 120 geltende Soll-Abstand ist. Dadurch wird dem Fahrzeug 120 Manövrierraum zur Korrektur seines Abstands 124 eingeräumt.

Nicht alle am Fahrzeugverband 100 teilnehmenden Fahrzeuge müssen gleiche Eigenschaften (insbesondere Fahr- und Rolleigenschaften) aufweisen. Insbesondere werden die mittleren Fahrzeuge des Fahrzeugverbands 100 bei reduziertem Abstand aufgrund des entsprechend reduzierten Luftwiderstandes ein besseres Rollverhalten aufweisen. Deshalb wird als weitere Maßnahme vorgeschlagen, dass jedes teilnehmende Fahrzeug individuell für einzelne Teilabschnitte (z. B. Kuppen) einen eigenen individuellen Geschwindigkeitsverlauf vorausberechnet, um beispielsweise das eigene Rollverhalten möglichst kraftstoffsparend zu nutzen. Als Randbedingung stellt die Vorausberechnung sicher, dass der Abstandsbedarf (also die zurückgelegte Strecke) für diesen Teilabschnitt übereinstimmt mit dem Abstandsbedarf der sich aus dem für alle teilnehmenden Fahrzeuge einheitlichen, ortsbezogenen Geschwindigkeitsverlauf ergibt.

Optional sind eine obere Grenze und/oder eine untere Grenze für den (beispielsweise ortsbezogenen) Soll-Abstand vorgegeben. Beispielsweise werden im Schritt 302 für die Längsregelungen aller Fahrzeuge im Fahrzeugverband 100 zwei unterschiedliche Werte der Zeitdifferenz 506 bereitgestellt, welche die untere bzw. obere Grenze des Abstands implizieren (vorzugsweise gemäß der funktionalen Abhängigkeit der Längsregelung, beispielsweise gemäß einer der vorgenannten Gleichungen). Die Längsregelung eines jeden Fahrzeugs kann seinen Abstand auf einen Wert zwischen dem oberen und dem unteren Soll-Wert des Abstands jeweils fahrzeug-individuell regeln, z. B. um innerhalb dieser Grenzen einen verbrauchsgünstigen Rollbetrieb und/oder ein wirkungsgradgünstiges Antriebsmoment auszuführen.

Die Kommunikation (beispielsweise das Senden und/oder das Empfangen) kann auf einer Vernetzung der Fahrzeuge im Fahrzeugverband basieren. Die Kommunikation kann Teil einer Fahrzeug-zu-Fahrzeug-Kommunikation oder Verkehrstelematik (engl.: "Intelligent Transportation Systems" oder ITS) sein, beispielsweise gemäß EU-Richtlinie 2010/40/EU. Die Vernetzung kann eine Zugehörigkeit zum Fahrzeugverband definieren. Die Vernetzung kann Sicherheitsfunktionen (beispielsweise ein synchrones Abbremsen der Fahrzeuge) umfassen.

Die Fahrzeuge im Fahrzeugverband 100 können direkt miteinander kommunizieren oder indirekt, beispielsweise über eine oder mehrere Mobilfunkbasisstationen und/oder einen oder mehrere Server. Die Fahrzeuge im Fahrzeugverband 100 können paarweise miteinander kommunizieren oder über einen gemeinsamen Kommunikationskanal.

Die Fahrzeuge im Fahrzeugverband können über Radiofrequenzen oder optisch kommunizieren. Die Radiofrequenzen können in einem Frequenzband bei 5.9 GHz oder dem ITS-Frequenzband (beispielsweise zwischen 5,85 GHz bis 5,925 GHz) liegen. Die Kommunikation kann auf einer physikalischen Ebene und/oder eine Ebene der Medienzugriffssteuerung gemäß dem Standard ETSI EN 302 663 und/oder dem Standard IEEE 802.11p ausgebildet sein.

Wie aus vorstehenden Ausführungsbeispielen ersichtlich, ermöglicht die Technik durch eine auf den einheitlichen, ortsbezogenen Geschwindigkeitsverlauf 404 und die konstante Zeitdifferenz 506 gestützte Längsregelung 204 eine Stabilisierung eines Fahrzeugverbands 100 mit vielen teilnehmenden Fahrzeugen, welche jeweils der ortsbezogenen Situationen entsprechend kraftstoffsparend fahren. Dabei kann die Zugehörigkeit zum Fahrzeugverband 204 durch die zentrale und/oder einheitliche Vorausberechnung des übergeordneten (d. h. für alle Fahrzeuge einheitlich vorgegebenen), ortsbezogenen Geschwindigkeitsverlaufs und dessen Verteilung im Schritt 302 an alle teilnehmenden Fahrzeuge definiert sein.

Die fahrzeugeigene Längsregelung 204 des Abstands 124 und der Geschwindigkeit 126 können so ausgelegt werden, dass die fahrzeugeigenen Längsregelungen der nachfolgenden Fahrzeuge stabilisiert werden. Dazu kann die Längsregelung 204 den Geschwindigkeitsfehler (d. h. die Differenz der eigenen Ist-Geschwindigkeit 126 zur Soll-Geschwindigkeit $v_{Soll}(x)$) verkleinern im Vergleich zur Längsregelung des vorausfahrenden Fahrzeugs.

Obwohl die Erfindung in Bezug auf exemplarische Ausführungsbeispiele beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Situation oder einen bestimmten Antrieb an die Lehre der Erfindung anzupassen. Folglich ist die Erfindung nicht auf die offenbarten Ausführungsbeispiele und Implementierungen beschränkt, sondern umfasst alle Ausführungsbeispiele, die in den Bereich der beigefügten Patentansprüche fallen.

**Bezugszeichenliste**

| | |
|---|---|
| 100 | Fahrzeugverband |
| 110 | Vorausfahrendes Fahrzeug |
| 118 | Kommunikationsantenne des vorausfahrenden Fahrzeugs |
| 120 | Nutzfahrzeug |
| 122, 123 | Abstandssensoren |
| 124 | Ist-Wert des Abstands |
| 125 | Ist-Wert des Zwischenabstands |
| 126 | Ist-Wert der Geschwindigkeit |
| 128 | Kommunikationsantenne des Nutzfahrzeugs |
| 130 | Nachfahrendes Fahrzeug |
| 138 | Kommunikationsantenne des nachfahrenden Fahrzeugs |
| 200 | Vorrichtung zur Längsregelung |
| 202 | Kommunikationseinheit |
| 204 | Längsregelung |
| 206 | Antriebseinheit |
| 300 | Verfahren zur Längsregelung des Nutzfahrzeugs |
| 302 | Schritt des Bereitstellens eines ortsbezogenen Geschwindigkeitsverlaufs |
| 304 | Schritt des Regelns der Längsdynamik |
| 402 | Höhenverlauf der Fahrstrecke |
| 404 | Ortsbezogener Geschwindigkeitsverlauf |
| 406 | Abschnitt mit Anstieg |
| 408 | Abschnitt mit Kuppe |
| 410 | Abschnitt mit Gefälle |
| 502 | Führungsgröße der Geschwindigkeit |
| 504 | Führungsgröße des Abstands |
| 506 | Konstante Zeitdifferenz |

**Patentansprüche**

1. Vorrichtung (200) zur Längsregelung eines Nutzfahrzeugs (120) in einem Fahrzeugverband (100) hintereinanderfahrender Fahrzeuge (110, 120, 130), umfassend:

eine Kommunikationseinheit (202) des Nutzfahrzeugs, die dazu ausgebildet ist, einen für die Fahrzeuge im Fahrzeugverband einheitlichen, ortsbezogenen Geschwindigkeitsverlauf (404) bereitzustellen für eine vorausliegende Fahrstrecke des Fahrzeugverbands; und

eine Längsregelung (204) des Nutzfahrzeugs,

**gekennzeichnet dadurch, dass** die Längsregelung dazu ausgebildet ist, einen variablen Abstand (124) zum vorausfahrenden Fahrzeug derart zu regeln, dass das Nutzfahrzeug eine vom ortsbezogenen Geschwindigkeitsverlauf vorgegebene Geschwindigkeit (502) mit einer konstanten Zeitdifferenz (506) zum vorausfahrenden Fahrzeug einhält.

2. Vorrichtung nach Anspruch 1, wobei eine Führungsgröße (504) des Abstands (124) proportional zu der vom ortsbezogenen Geschwindigkeitsverlauf (404) vorgegeben Geschwindigkeit (502) ist.

3. Vorrichtung nach Anspruch 1 oder 2, wobei eine Führungsgröße (504) des Abstands (124) proportional zu der vom ortsbezogenen Geschwindigkeitsverlauf (404) vorgegebenen Geschwindigkeit (502) ist, die über den Abstand (124) zwischen dem Nutzfahrzeug und dem vorausfahrenden Fahrzeug gemittelt ist.

4. Vorrichtung nach einem der Ansprüche 1 bis 3, wobei die Längsregelung (204) eine Integration oder Summe des Kehrwerts der vom ortsbezogenen Geschwindigkeitsverlauf (404) vorgegebenen Geschwindigkeit (502) über den Abstand (124) auf die konstante Zeitdifferenz (506) regelt.

5. Vorrichtung nach einem der Ansprüche 1 bis 4, wobei das Bereitstellen des ortsbezogenen Geschwindigkeitsverlaufs ein Bestimmen des ortsbezogenen Geschwindigkeitsverlaufs (404) im Nutzfahrzeug (120) oder ein Empfangen des ortsbezogenen Geschwindigkeitsverlaufs (404) von einem Fahrzeug (110) des Fahrzeugverbands (100) umfasst.

6. Vorrichtung nach einem der Ansprüche 1 bis 5, wobei der ortsbezogene Geschwindigkeitsverlauf (404) von einem Höhenverlauf (402) der vorausliegenden Fahrstrecke des Fahrzeugverbands (100) abhängig ist.

7. Vorrichtung nach einem der Ansprüche 1 bis 6, wobei der ortsbezogene Geschwindigkeitsverlauf (404) ferner abhängig von einem Rollvermögen, einem Antriebsvermögen und/oder einem rekuperierenden Bremsvermögen der einzelnen Fahrzeuge (110, 120, 130) des Fahrzeugverbands (100) bestimmt ist zur Minimierung der Antriebsenergie auf der vorausliegenden Fahrstrecke.

8. Vorrichtung nach Anspruch 7, wobei die Kommunikationseinheit (202) ferner dazu ausgebildet ist, das Rollvermögen, das Antriebsvermögen und/oder das rekuperierende Bremsvermögen zu kommunizieren.

9. Vorrichtung nach einem der Ansprüche 1 bis 8, wobei der Abstand auf Schwerpunkte, Mittelpunkte, Vorderkanten oder Endkanten der im Fahrzeugverband (100) hintereinanderfahrenden Fahrzeuge (110, 120, 130) bezogen ist.

10. Vorrichtung nach einem der Ansprüche 1 bis 9, wobei die Längsregelung den Abstand (124) und eine Geschwindigkeit (126) des Nutzfahrzeugs (120) regelt, und wobei die vom ortsbezogenen Geschwindigkeitsverlauf (404) am Ort des Nutzfahrzeugs vorgegeben Geschwindigkeit eine Führungsgröße (502) der Geschwindigkeit des Nutzfahrzeugs ist.

11. Vorrichtung nach Anspruch 10, wobei die Längsregelung (204) des Nutzfahrzeugs (120) die Geschwindigkeit (126) des Nutzfahrzeugs so regelt, dass eine Abweichung zwischen der Geschwindigkeit (126) des Nutzfahrzeugs und der vom ortsbezogenen Geschwindigkeitsverlauf (404) am Ort des Nutzfahrzeugs vorgegeben Geschwindigkeit (502) kleiner ist als die entsprechende Abweichung der Geschwindigkeit des vorausfahrenden Fahrzeugs (110).

12. Vorrichtung nach einem der Ansprüche 1 bis 11, ferner eine Berechnungseinheit umfassend, die dazu ausgebildet ist, abhängig vom Rollvermögen, Antriebsvermögen und/oder rekuperierenden Bremsvermögen des Nutzfahrzeugs einen fahrzeug-optimierten Geschwindigkeitsverlauf und/oder einen fahrzeug-optimierten Abstandsverlauf des Nutzfahrzeugs (120) für einen Abschnitt (408) der vorausliegenden Fahrstrecke vorauszuberechnen mit der Randbedingung, dass jeweils am Anfang und am Ende des Abschnitts (408) der resultierende Abstand und/oder die resultierende Geschwindigkeit übereinstimmt mit der durch den einheitlichen, ortsbezogenen Geschwindigkeitsverlauf (404) vorgegebenen Führungsgröße des Abstands (504) beziehungsweise der Geschwindigkeit (502).

13. Vorrichtung nach einem der Ansprüche 1 bis 12, wobei die Kommunikationseinheit (202) des Nutzfahrzeugs (120) ferner einen Bereich für die konstante Zeitdifferenz (506) bereitstellt, und die Längsregelung (204) die konstanten Zeitdifferenz (506) im Bereich festlegt abhängig vom Rollvermögen, Antriebsvermögen und/oder rekuperierenden Bremsvermögen des Nutzfahrzeugs (120) für einen fahrzeug-optimierten Geschwindigkeitsverlauf und/oder einen fahrzeug-optimierten Abstandsverlauf des Nutzfahrzeugs.

**14.** Vorrichtung nach einem der Ansprüche 1 bis 13, wobei die Längsregelung (204) dazu ausgebildet ist, den Abstand (124) auf Grundlage des ortsbezogenen Geschwindigkeitsverlaufs (404) zu regeln, wenn die Geschwindigkeit (126) des Nutzfahrzeugs (120) größer als eine Mindestgeschwindigkeit ist.

**15.** Nutzfahrzeug (120), das eine Vorrichtung (200) zur Längsregelung des Nutzfahrzeugs in einem Fahrzeugverband (100) hintereinanderfahrender Fahrzeuge (110, 120, 130) nach einem der Ansprüche 1 bis 14 umfasst.

## Claims

**1.** Apparatus (200) for longitudinal control of a truck (120) in a vehicle convoy (100) of vehicles (110, 120, 130) travelling behind one another, comprising:

a communications unit (202) of the truck, which is designed to provide a uniform, location-based speed profile (404) for the vehicles in the vehicle convoy for a route lying ahead of the vehicle convoy; and
longitudinal control (204) of the truck, **characterized in that** the longitudinal control is designed to control a variable distance (124) to the vehicle travelling in front in such a way that the truck maintains a speed (502) predefined by the location-based speed profile with a constant time difference (506) to the vehicle travelling in front.

**2.** Apparatus according to Claim 1, wherein a reference variable (504) of the distance (124) is proportional to the speed (502) predefined by the location-based speed profile (404).

**3.** Apparatus according to Claim 1 or 2, wherein a reference variable (504) of the distance (124) is proportional to the speed (502) predefined by the location-based speed profile (404), which is averaged over the distance (124) between the truck and the vehicle travelling in front.

**4.** Apparatus according to one of Claims 1 to 3, wherein the longitudinal control (204) controls an integration or sum of the reciprocal of the speed (502) predefined by the location-based speed profile (404) over the distance (124) to the constant time difference (506).

**5.** Apparatus according to one of Claims 1 to 4, wherein the provision of the location-based speed profile comprises a determination of the location-based speed profile (404) in the truck (120) or reception of the location-based speed profile (404) from a vehicle (110) of the vehicle convoy (100).

**6.** Apparatus according to one of Claims 1 to 5, wherein the location-based speed profile (404) depends on a height profile (402) of the route lying ahead of the vehicle convoy (100).

**7.** Apparatus according to one of Claims 1 to 6, wherein the location-based speed profile (404) is also determined depending on a rolling capability, a drive capability and/or a recuperative braking capability of the individual vehicles (110, 120, 130) of the vehicle convoy (100), in order to minimize the drive energy on the route lying ahead.

**8.** Apparatus according to Claim 7, wherein the communications unit (202) is also configured to communicate the rolling capability, the drive capability and/or the recuperative braking capability.

**9.** Apparatus according to one of Claims 1 to 8, wherein the distance is based on centres of gravity, centre points, front edges or rear edges of the vehicles (110, 120, 130) travelling behind one another in the vehicle convoy (100).

**10.** Apparatus according to one of Claims 1 to 9, wherein the longitudinal control controls the distance (124) and a speed (126) of the truck (120), and wherein the speed predefined by the location-based speed profile (404) at the location of the truck is a reference variable (502) of the speed of the truck.

**11.** Apparatus according to Claim 10, wherein the longitudinal control (204) of the truck (120) controls the speed (126) of the truck such that a deviation between the speed (126) the truck and the speed (502) predefined by the location-based speed profile (404) at the location of the truck is smaller than the corresponding deviation of the speed of the vehicle (110) travelling in front.

12. Apparatus according to one of Claims 1 to 11, also comprising a calculation unit which is designed, depending on rolling capability, drive capability and/or recuperative braking capability of the truck, to pre-calculate a vehicle-optimized speed profile and/or a vehicle-optimized distance profile of the truck (120) for a section (408) of the route lying ahead, with the boundary condition that, in each case at the start and at the end of the section (408), the resulting distance and/or the resulting speed agrees with the reference variable of the distance (504) or the speed (502) predefined by the uniform, location-based speed profile (404).

13. Apparatus according to one of Claims 1 to 12, wherein the communications unit (202) of the truck (120) also provides a range for the constant time difference (506) and the longitudinal control (204) defines the constant time difference (506) in the range, depending on the rolling capability, drive capability and/or recuperative braking capability of the truck (120) for a vehicle-optimized speed profile and/or a vehicle-optimized distance profile of the truck.

14. Apparatus according to one of Claims 1 to 13, wherein the longitudinal control (204) is designed to control the distance (124) on the basis of the location-based speed profile (404) when the speed (126) of the truck (120) is greater than a minimum speed.

15. Truck (120) which comprises an apparatus (200) for the longitudinal control of the truck in a vehicle convoy (100) of vehicles (110, 120, 130) travelling behind one another according to one of Claims 1 to 14.

**Revendications**

1. Dispositif (200) de régulation longitudinale d'un véhicule utilitaire (120) dans un convoi de véhicules (100) constitué de véhicules (110, 120, 130) roulant les uns derrière les autres, comportant :

une unité de communication (202) du véhicule utilitaire, laquelle est conçue pour fournir un profil de vitesse (404) localisé uniforme pour les véhicules dans le convoi de véhicules pour un trajet de déplacement à venir du convoi de véhicules ; et
une régulation longitudinale (204) du véhicule utilitaire,
**caractérisé en ce que** la régulation longitudinale est conçue pour réguler une distance variable (124) au véhicule qui précède de telle sorte que le véhicule utilitaire maintienne une vitesse (502) prédéfinie par le profil de vitesse localisé avec une différence de temps (506) constante par rapport au véhicule qui précède.

2. Dispositif selon la revendication 1, dans lequel une grandeur de commande (504) de la distance (124) est proportionnelle à la vitesse (502) prédéfinie par le profil de vitesse (404) localisé.

3. Dispositif selon la revendication 1 ou 2, dans lequel une grandeur de commande (504) de la distance (124) est proportionnelle à la vitesse (502) prédéfinie par le profil de vitesse (404) localisé, laquelle vitesse est moyennée sur la distance (124) entre le véhicule utilitaire et le véhicule qui précède.

4. Dispositif selon l'une des revendications 1 à 3, dans lequel la régulation longitudinale (204) régule à la différence de temps constante (506) une intégration ou une somme de la valeur réciproque de la vitesse (502) prédéfinie par le profil de vitesse (404) localisé sur la distance (124).

5. Dispositif selon l'une des revendications 1 à 4, dans lequel la fourniture du profil de vitesse localisé comporte une détermination du profil de vitesse (404) localisé dans le véhicule utilitaire (120) ou une réception du profil de vitesse (404) localisé par un véhicule (110) du convoi de véhicules (100).

6. Dispositif selon l'une des revendications 1 à 5, dans lequel le profil de vitesse (404) localisé est dépendant d'un profil de hauteur (402) du trajet de déplacement à venir du convoi de véhicules (100).

7. Dispositif selon l'une des revendications 1 à 6, dans lequel le profil de vitesse (404) localisé est en outre déterminé en fonction d'une capacité de roulage en roue libre, d'une capacité de propulsion et/ou d'une capacité de freinage récupératif des véhicules individuels (110, 120, 130) du convoi de véhicules (100) pour réduire au minimum l'énergie de propulsion sur le trajet de déplacement à venir.

8. Dispositif selon la revendication 7, dans lequel l'unité de communication (202) est en outre conçue pour communiquer la capacité de roulage en roue libre, la capacité de propulsion et/ou la capacité de freinage récupératif.

9. Dispositif selon l'une des revendications 1 à 8, dans lequel la distance se rapporte à des centres de gravité, des centres, des bords avant ou des bords d'extrémité des véhicules (110, 120, 130) roulant les uns derrière les autres dans le convoi de véhicules (100).

10. Dispositif selon l'une des revendications 1 à 9, dans lequel la régulation longitudinale régule la distance (124) et une vitesse (126) du véhicule utilitaire (120), et dans lequel la vitesse prédéfinie par le profil de vitesse (404) localisé à l'emplacement du véhicule utilitaire est une grandeur de commande (502) de la vitesse du véhicule utilitaire.

11. Dispositif selon la revendication 10, dans lequel la régulation longitudinale (204) du véhicule utilitaire (120) régule la vitesse (126) du véhicule utilitaire de telle sorte qu'un écart entre la vitesse (126) du véhicule utilitaire et la vitesse (502) prédéfinie par le profil de vitesse (404) localisé à l'emplacement du véhicule utilitaire est inférieur à l'écart correspondant de la vitesse du véhicule (110) qui précède.

12. Dispositif selon l'une des revendications 1 à 11, comportant en outre une unité de calcul qui est conçue pour calculer, en fonction de la capacité de roulage en roue libre, de la capacité de propulsion et/ou de la capacité de freinage récupératif du véhicule utilitaire, un profil de vitesse optimisé pour le véhicule et/ou un profil de distance, optimisé pour le véhicule, du véhicule utilitaire (120) pour une partie (408) du trajet de déplacement à venir, avec la condition limite suivant laquelle, respectivement au début et à la fin de la partie (408), la distance résultante et/ou la vitesse résultante correspondent à la grandeur de commande de la distance (504), respectivement de la vitesse (502), prédéfinie par le profil de vitesse (404) localisé uniforme.

13. Dispositif selon l'une des revendications 1 à 12, dans lequel l'unité de communication (202) du véhicule utilitaire (120) fournit en outre une plage pour la différence de temps constante (506), et la régulation longitudinale (204) définit la différence de temps constante (506) dans la plage en fonction de la capacité de roulage en roue libre, de la capacité de propulsion et/ou de la capacité de freinage récupératif du véhicule utilitaire (120) pour un profil de vitesse optimisé pour le véhicule et/ou un profil de distance, optimisé pour le véhicule, du véhicule utilitaire.

14. Dispositif selon l'une des revendications 1 à 13, dans lequel la régulation longitudinale (204) est conçue pour réguler la distance (124) sur la base du profil de vitesse (404) localisé lorsque la vitesse (126) du véhicule utilitaire (120) est supérieure à une vitesse minimale.

15. Véhicule utilitaire (120), lequel comporte un dispositif (200) de régulation longitudinale du véhicule utilitaire dans un convoi de véhicules (100) constitué de véhicules (110, 120, 130) roulant les uns derrière les autres selon l'une des revendications 1 à 14.

## FIG. 1

EP 3 316 064 B1

FIG. 2

EP 3 316 064 B1

## FIG. 3

EP 3 316 064 B1

300

| |
|---|
| Bereitstellen eines ortsbezogenen Geschwindigkeitsverlaufs, der einheitlich für mehrere in einem Fahrzeugverband hintereinanderfahrende Fahrzeuge ist |

— 302

| |
|---|
| Regeln der Längsdynamik eines Nutzfahrzeugs im Fahrzeugverband, wobei ein Abstand zum vorausfahrenden Fahrzeug variabel geregelt wird, und eine Geschwindigkeit gemäß dem Geschwindigkeitsverlauf geregelt wird mit einer konstanten Zeitdifferenz zum vorausfahrenden Fahrzeug. |

— 304

FIG. 4

# FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015047178 A1
- DE 102008023135 A1
- DE 102008023135
- DE 102013011549

**In der Beschreibung aufgeführte Nicht-Patentliteratur**

- Control of platoons of heavy-duty vehicles using a delay-based spacing policy. **B. BESSELINK ; K.H. JOHANSSON.** IFAC-PapersOnLine. 2015, vol. 48, 364-369